Europäisches Patentamt

European Patent Office

Office européen des brevets

(19)

(11) **EP 1 317 613 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.⁷: **F02D 37/02**, F02D 41/40, F02P 5/152, F02D 21/08

(21) Anmeldenummer: **01960138.4**

(22) Anmeldetag: **02.08.2001**

(86) Internationale Anmeldenummer:
**PCT/DE2001/002941**

(87) Internationale Veröffentlichungsnummer:
**WO 2002/020964 (14.03.2002 Gazette 2002/11)**

(54) **VERFAHREN ZUM BETREIBEN EINER BRENNKRAFTMASCHINE UND ENTSPRECHENDE VORRICHTUNG**

METHOD FOR OPERATING AN INTERNAL COMBUSTION ENGINE, AND A CORRESPONDING DEVICE

PROCEDE POUR ACTIONNER UN MOTEUR A COMBUSTION INTERNE ET DISPOSITIF CORRESPONDANT

(84) Benannte Vertragsstaaten:
**DE FR GB IT**

(30) Priorität: **04.09.2000 DE 10043693**

(43) Veröffentlichungstag der Anmeldung:
**11.06.2003 Patentblatt 2003/24**

(73) Patentinhaber: **ROBERT BOSCH GMBH**
**70442 Stuttgart (DE)**

(72) Erfinder:
• **SAULER, Jürgen**
**70192 Stuttgart (DE)**
• **TORNO, Oskar**
**71701 Schwieberdingen (DE)**
• **HEINSTEIN, Axel**
**71229 Wimsheim (DE)**
• **KLUTH, Carsten**
**70469 Stuttgart (DE)**
• **HAEMING, Werner**
**74861 Neudenau (DE)**

(56) Entgegenhaltungen:
GB-A- 2 055 961          US-A- 4 846 130
US-A- 6 041 756

• **PATENT ABSTRACTS OF JAPAN vol. 006, no. 106 (M-213), 10. Mai 1983 (1983-05-10) & JP 58 028531 A (TOYOTA JIDOSHA KOGYO KK), 19. Februar 1983 (1983-02-19)**
• **PATENT ABSTRACTS OF JAPAN vol. 012, no. 208 (M-709), 15. Juni 1988 (1988-06-15) & JP 63 012861 A (NISSAN MOTOR CO LTD), 20. Januar 1988 (1988-01-20)**
• **PATENT ABSTRACTS OF JAPAN vol. 010, no. 378 (M-546), 17. Dezember 1986 (1986-12-17) & JP 61 169641 A (TOYOTA MOTOR CORP), 31. Juli 1986 (1986-07-31)**
• **PATENT ABSTRACTS OF JAPAN vol. 1999, no. 12, 29. Oktober 1999 (1999-10-29) & JP 11 190236 A (YAMAHA MOTOR CO LTD), 13. Juli 1999 (1999-07-13)**
• **PATENT ABSTRACTS OF JAPAN vol. 011, no. 014 (M-553), 14. Januar 1987 (1987-01-14) & JP 61 190119 A (TOYOTA MOTOR CORP), 23. August 1986 (1986-08-23)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 317 613 B1

**Beschreibung**

Stand der Technik

Die Erfindung geht aus von einem Verfahren zum Betreiben einer Brennkraftmaschine und einer entsprechenden Vorrichtung nach Gattung der unabhängigen Ansprüche.

Es ist bereits ein Verfahren zum Betreiben einer Brennkraftmaschine und eine entsprechende Vorrichtung bekannt, bei denen in mindestens einem Zylinder eine Verbrennung eines in den Zylinder eingebrachten Kraftstoffs in einem Kraftstoff-Luft-Gemisch stattfindet. Es sind weiterhin Stelleinrichtungen, beispielsweise das Abgasrückführungsventil, eine Nockenwellenverstellung für den Einlass und/oder den Auslass, eine variable Ventilsteuerung oder eine Ladungsbewegungsklappe bekannt, die physikalische Vorgänge wie beispielsweise die Abgasrückführungsrate, die Intensität der Bewegung des Kraftstoff-Luft-Gemisch, die Menge der zugeführten Frischluft oder die Menge des zugeführten Kraftstoff-Luft-Gemischs beeinflussen, wobei diese physikalischen Vorgänge die Verteilung der Bestandteile und/oder die Gesamtzusammensetzung des Kraftstoff-Luft-Gemischs im Zylinder verändern.

Desweiteren sind für Brennkraftmaschinen Klopferkennungsund Klopfregelungssysteme bekannt, so dass ein Auftreten von Klopfen in einem Zylinder erkannt werden wird, wobei nach Auftreten eines Klopfsignals der Zündwinkel nach Spät verstellt wird.

Bei einer Erhöhung der Rate des rückgeführten Abgases wird bei bekannten Brennkraftmaschinen der Basiszündwinkel um einen festen, vorgegebenen Winkel nach Früh verstellt siehe z.B. US 6 041 756.

Vorteile der Erfindung

Das erfindungsgemäße Verfahren und die erfindungsgemäße Vorrichtung mit den Merkmalen der unabhängigen Ansprüche haben demgegenüber den Vorteil, dass die Brennkraftmaschine bei dynamischen Betriebszuständen an der Klopfgrenze betrieben werden kann, so dass ein maximaler Wirkungsgrad erreicht wird.

Durch die in den Unteransprüchen aufgeführten Maßnahmen sind vorteilhafte Weiterbildungen und Verbesserungen des im unabhängigen Anspruch angegebenen Verfahrens sowie der im unabhängigen Anspruch angegebenen Vorrichtung möglich. Besonders vorteilhaft ist, bei einer Änderung der Abgasrückführungsrate die Brennkraftmaschine schnell an der Klopfgrenze betrieben zu können. Dies gilt ebenfalls für eine Änderung der Stellung der Ladungsbewegungsklappe oder für eine nockenwellenverstellungsbedingte oder variable ventilverstellungsbedingte Änderung der Luftzufuhr oder der Kraftstoff-Luft-Gemisch-Zufuhr. Eine zusätzliche Beschleunigung der Heranführung an die Klopfgrenze wird erreicht, wenn zu dem Grundzündwinkel zusätzlich ein Frühverstellwinkel addiert wird. Es ist weiterhin vorteilhaft, die Verkleinerung des Verstellwinkels für alle Zylinder gleichzeitig vorzunehmen, da so für alle Zylinder sofort die Anpassung an die neuen Bedingungen erreicht werden kann. In bestimmten Fällen, wenn die einzelnen Zylinder sich in ihren Eigenschaften stark unterscheiden, ist es vorteilhaft, die schnelle Verkleinerung des Verstellwinkels zylinderindividuell vorzunehmen. Es ist weiterhin vorteilhaft, bei Aktivierung der schnellen Verkleinerung des Verstellwinkels den Referenzwert schnell mitzuführen, da auch die Klopferkennung schnell an die neuen Bedingungen angepasst werden sollte. Bei Auftreten von Klopfen oder bei einer Lastdynamik ist es dann ratsam, um Klopfen zu vermeiden, die schnelle Verkleinerung abzubrechen.

Beschreibung der Ausführungsbeispiele

Klopfen, d.h. ein anormaler Verbrennungsvorgang im Brennraum einer Brennkraftmaschine, begrenzt die Leistung und den Wirkungsgrad und führt durch die hohen Flammgeschwindigkeiten zu Schädigungen des Brennraums. Um dies zu verhindern, werden in modernen Brennkraftmaschinen Systeme zur Klopferkennung und Klopfregelung integriert. Derartige Systeme sind aus der Literatur hinreichend bekannt, ihre Funktionsweise soll deshalb im Folgenden lediglich kurz zusammengefasst werden.

Mittels der zur Klopferkennung gehörenden Klopfsensoren werden Signale aus dem Brennraum erfasst, die an eine ebenfalls zur Klopferkennung gehörende Auswerteeinheit weitergegeben werden. Derartige Signale können beispielsweise akustische Signale, elektromagnetische Signale, elektrische Signale, Drucksignale oder Temperatursignale sein, die innerhalb oder außerhalb des Brennraums durch die Klopfsensoren aufgenommen werden. Die Auswerteeinheit nimmt eine Verstärkung der Signale vor und integriert die Signale in geeigneter Weise, so dass in einem in der Brennkraftmaschine enthaltenen Mikroprozessor nach einer Analog-/Digitalwandlung der Signale der integrierte Wert $U_{INT,aktuell}$ mit einem Schwellwert verglichen werden kann, wobei bei Überschreitung des Schwellwerts ein Klopfen erkannt wird. In der Auswerteeinheit kann weiterhin zur Unterdrückung von Störsignalen beispielsweise eine Auswahl eines bestimmten Frequenzbandes bzw. eine Auswahl bezüglich eines bestimmten Zeitfensters erfolgen, wobei das Frequenzband bzw. das Zeitfenster charakteristisch für das Auftreten von Klopfsignalen ist.

Das aktuelle digitalisierte Klopfsignal $U_{INT,aktuell}$ wird in einem bevorzugten Ausführungsbeispiel zur Klopferkennung durch den Mikroprozessor mit einem Referenzwert $U_{REF,alt}$ des jeweiligen aktuellen Zylinders verglichen. Der Vergleich beinhaltet die Ermittlung einer relativen Klopfintensität RKI, die sich als Quotient aus dem aktuellen Klopfsignal und dem zylinderindividuellen Referenzwert ergibt:

$$RKI = \frac{U_{INT,aktuell}}{U_{REF,alt}}.$$

Die relative Klopfintensität RKI wird anschließend mit einem Klopferkennungsschwellwert verglichen. Auch in diesem Ausführungsbeispiel wird der Klopferkennungsschwellwert wiederum durch den Mikroprozessor bereitgestellt. In einem bevorzugten Ausführungsbeispiel wird dabei ein zylinderindividueller Klopferkennungsschwellwert für den aktuellen Zylinder bereitgestellt.

Der zylinderindividuelle Referenzwert $U_{REF,alt}$, der zur Berechnung der relativen Klopfintensität RKI benötigt wird, wird laufend an den aktuellen Betriebszustand der Brennkraftmaschine angepasst. Dies geschieht mit Hilfe eines Nachführfaktors N, mit dessen Hilfe ein neuer zylinderindividueller Referenzwert $U_{REF,neu}$ berechnet wird, in dem das aktuelle Klopfsignal $U_{INT,aktuell}$ berücksichtigt wird. Die Berechung des neuen zylinderindividuellen Referenzwerts $U_{REF,neu}$ erfolgt vorzugsweise mittels folgender Gleichung:

$$U_{REF,neu} = \frac{N-1}{N} \times U_{REF,alt} + \frac{1}{N} \times U_{INT,aktuell}.$$

Wurde ein Klopfen erkannt, dann wird von dem in der Brennkraftmaschine integrierten Mikroprozessor die Klopfregelung dahingehend vorgenommen, dass zu einem Grundzündwinkel ein Verstellwinkel addiert wird, wobei die Summe den Basiszündwinkel bildet. Dabei wird der Basiszündwinkel weiter nach Spät verschoben, je größer der Verstellwinkel ist. Der Verstellwinkel wird im Rahmen dieser Anmeldung als positiver Wert definiert. Die Spätverstellung des Basiszündwinkels bewirkt eine Reduzierung des Klopfens. Tritt erneut ein Klopfen auf, dann wird der Basiszündwinkel durch Erhöhung des Verstellwinkels erneut nach Spät verschoben. Von der Momentenstruktur wird außerdem aufgrund der Momentenanforderungen ein momentenbasierter Zündwinkel berechnet, der den frühest möglichen Zündwinkel darstellt. Der Basiszündwinkel und der momentenbasierte Zündwinkel werden in dem Verfahren zur Berechnung des Zündwinkels anschließend miteinander verglichen, wobei als zu realisierender Zündwinkel der spätere der beiden Zündwinkel dient. Der Grundzündwinkel wird dabei aus einem lastund/oder drehzahlabhängigen Kennfeld gelesen, das Zündwinkel bei Normbedingungen enthält und im Mikroprozessor der Brennkraftmaschine gespeichert ist. Es enthält Werte für den Grundzündwinkel, die bestimmten Bereichen der Drehzahl und/oder der Last zugeordnet sind. Die Drehzahl wird dabei von Sensoren ermittelt, die vorzugsweise an der Kurbelwelle angebracht sind. Die Last, d.h. die relative Luftfüllung des jeweiligen Zylinders, wird durch den Mikroprozessor aufgrund verschiedener Betriebsparameter wie Drehzahl, Momentenanforderung sowie aufgrund der Messwerte des Heißfilm-Luftmassenmessers (HFM) und des Saugrohrdrucksensors, der Rate des rückgeführten Abgases oder der Stellung der Drosselklappe mit Hilfe von Modellen ermittelt und für die Ermittlung des Grundzündwinkels bereitgestellt. Die relative Luftfüllung ist definiert als das Verhältnis aus der aktuellen Luftfüllung und der Luftfüllung unter Normbedingungen für den jeweiligen Zylinder. Die Verstellung des Zündwinkels durch die Klopfregelung erfolgt solange, bis kein Klopfen mehr auftritt. Die Verstellung des Zündwinkels in den einzelnen Schritten addiert sich zu einem Verstellwinkel, der die Gesamtverstellung des Basiszündwinkels bezogen auf den Grundzündwinkel angibt. Tritt über einen bestimmten Zeitraum kein Klopfen mehr auf, dann wird durch die Klopfregelung der Basiszündwinkel wieder nach Früh verstellt. Entsprechend verkleinert sich der Verstellwinkel.

Eine Abgasrückführung beinhaltet die Rückführung von Abgas zu einer erneuten Verbrennung in den Brennraum. Sie kann sowohl in einer benzindirekteinspritzenden Brennkraftmaschine als auch in einer Brennkraftmaschine mit Saugrohreinspritzung durchgeführt werden. Eine Abgasrückführung schließt dabei sowohl eine interne als auch eine externe Abgasrückführung ein, wobei als interne Abgasrückführung der Vorgang bezeichnet wird, bei dem im Zylinder das Abgas nicht vollständig ausgestoßen wird, sondern Abgas im Zylinder verbleibt, das im nächsten Arbeitszyklus wieder Bestandteil des Kraftstoff-Luft-Gemischs im Zylinder ist. Die externe Abgasrückführung umfasst die Rückführung von Abgas aus dem Abgastrakt in das Saugrohr der Brennkraftmaschine. Die Rate des extern rückgeführten Abgases wird dabei über das Abgasrückführungsventil beeinflusst, welches wiederum durch den Mikroprozessor gesteuert wird. Die Rate des intern rückgeführten Abgases kann durch die Ein- und Auslassnockenwellenstellung oder durch die variable Ventilverstellung beeinflusst werden. Dabei wird durch die Stellung der Nockenwelle der Kurbelwellenwinkel verändert, bei dem die Ventile öffnen und, da die Kurbelwellenwinkelspanne, bei der die Ventile geöffnet sind, nicht verändert wird, wird mit einer Veränderung der Stellung der Nockenwelle auch der Kurbelwellenwinkel geändert, bei dem die Ventile schließen. Dabei ist in einem Ausführungsbeispiel die Nockenwellenverstellung aller Ventile eines Zylinders und in einem anderen Ausführungsbeispiel die Nockenwellenverstellung der Einlassventile und der Auslassvenile separat möglich. Mittels der variablen Ventilverstellung kann das Öffnen und das Schließen eines jeden Ventils beliebig beeinflusst werden. Bei einer Erhöhung der Rate des rückgeführten Abgases wird der Sauerstoffgehalt des im Zylinder befindlichen Kraftstoff-Luft-Gemischs verringert, so dass die Entstehung anormaler Verbrennungsvorgänge im Brennraum erschwert und die Verbrennungsspitzentemperatur gesenkt wird.

Die Stellung der Ladungsbewegungsklappe ermöglicht in einer Brennkraftmaschine die Steuerung der Intensität der Ladungsbewegung. Das Saugrohr besitzt im Bereich des Einlassventils zwei geometrisch verschieden geformte Kanäle. Die Ladungsbewegungsklappe ist das Stellglied in einem der Kanäle, um die Luftströmung unterschiedlich auf die beiden Kanäle aufzuteilen und damit die Bewegung der Ladung einzustellen. Ein Kanal ist so ausgebildet, dass der Luft beim Durchströmen eine Bewegung senkrecht zur Hauptströmungsrichtung aufgezwungen wird, der andere Kanal ist möglichst strömungsgünstig geformt, um den Strömungswiderstand gering zu halten. Bei Einschnürung des Einlasskanals durch die Ladungsbewegungsklappe wird eine hohe Ladungsbewegung erzielt.

Erfindungsgemäß wird nun, wenn die Erhöhung der Rate des rückgeführten Abgases einen vorgebbaren und applizierbaren Ratenänderungsschwellwert überschreitet, die schnelle Frühverstellung aktiviert, bei der der Verstellwinkel schnell verkleinert wird. Die schnelle Verkleinerung des Verstellwinkels wird erreicht, indem der Verstellwinkel in großen Schritten und/oder mit einer hohen Frequenz verkleinert wird. Die Verkleinerung erfolgt damit schneller als bei der oben beschriebenen Verkleinerung des Verstellwinkels, wenn über längere Zeiträume kein Klopfen mehr aufgetreten ist. Die schnelle Verkleinerung führt dazu, dass der Motor schnell an die Klopfgrenze, die bei einer Änderung der Abgasrückführungsrate verändert wurde, betrieben wird. Damit kann ein hoher Wirkungsgrad erreicht werden.

Bei Auftreten von Klopfen bzw. bei Vorliegen einer Last- bzw. Drehzahldynamik wird die schnelle Verkleinerung des Verstellwinkels wieder deaktiviert und die Klopfregelung wird normal weiterbetrieben, indem der Verstellwinkel bei Klopfen vergrößert wird oder, wenn nach einem bestimmten Zeitraum kein Klopfen erfolgte, der Verstellwinkel wieder verkleinert wird. Dabei wird durch den Mikroprozessor eine Lastdynamik und eine Drehzahldynamik erkannt, wenn die Laständerung einen Lastschwellwert bzw. einen Drehzahlschwellwert überschreitet.

Die schnelle Verkleinerung bzw. die normale Klopfregelung wird durch den Mikroprozessor gesteuert. Auch die Steuerung der Verstellglieder wie Abgasrückführungsventil, Nockenwellenverstellung, variable Ventilverstellung, Ladungsbewegungsklappe wird durch den Mikroprozessor vorgenommen. Im Mikroprozessor sind ferner alle in Zusammenhang mit vorliegender Erfindung erwähnten Schwellwerte gespeichert.

Analog wird eine Änderung der Abgasrückführungsrate auch erreicht, wenn die Abgasrückführungsventilverstellung, die Nockenwellenverstellung, also die Ein- und Auslassnockenwellenverstellung, verändert wird oder die variable Ventilverstellung verändert wird. Dabei wirkt sich die Abgasrückführungsventilverstellung auf die externe Rate des rückgeführten Abgases und die Nockenwellenverstellung sowie die variable Ventilverstellung auf die interne Rate des rückgeführten Abgases aus. Überschreitet die jeweilige Verstellung einen jweiligen vorgebbaren, applizierbaren Schwellwert (den Abgasrückführungsventiländerungsschwellwert, den Ein-/Auslassnockenwellenänderungsschwellwert oder den ersten Ventiländerungsschwellwert), dann wird der Verstellwinkel wie oben beschrieben, schnell verkleinert.

In einem weiteren bevorzugten Ausführungsbeispiel der Erfindung wird auch dann, wenn die Intensität der Bewegung des Kraftstoff-Luft-Gemischs durch die starke Änderung der Stellung der Ladungsbewegungsklappe stark verändert wird, der Verstellwinkel wie oben beschrieben schnell verkleinert. Die starke Änderung der Stellung der Ladungsbewegungsklappe wird durch Überschreiten des vorgebbaren, applizierbaren Ladungsbewegungsklappenänderungsschwellwert gemessen.

In einem weiteren bevorzugten Ausführungsbeispiel der Erfindung wird bei einer starken Änderung Menge der zugeführten Frischluft bzw. der Menge des Kraftstoff-Luft-Gemischs die oben beschriebene schnelle Verkleinerung des Verstellwinkels aktiviert. Die Änderung der Menge der zugeführten Frischluft bzw. der Menge des Kraftstoff-Luft-Gemischs wird dabei über die Änderung der Nockenwellenverstellung, insbesondere der Einlass-und/oder Auslassnockenwellenverstellung, oder die Änderung der variablen Ventilverstellung beeinflusst und an dieser Änderung mittels Schwellwerten gemessen (Ein/Auslassnockenwellenänderungsschwellwert bzw. zweiter Ventiländerungsschwellwert).

In einem weiteren Ausführungsbeispiel der Erfindung wird zusätzlich zu der schnellen Verkleinerung des Verstellwinkels ein Frühverstellwinkel zu dem Verstellwinkel und dem Grundzündwinkel addiert, so dass der Basiszündwinkel nun aus der Summe aus Verstellwinkel, Grundzündwinkel und Frühverstellwinkel gebildet wird. Der Frühverstellwinkel ist dabei ein negativer Wert. Dabei wird für jeden physikalischen Vorgang ein anderer, vorgebbarer, applizierbarer Frühverstellwinkel vorgesehen: ein erster Frühverstellwinkel für die Änderung der Abgasrückführungsrate, ein zweiter Frühverstellwinkel für die Änderung der Intensität der Bewegung des Kraftstoff-Luft-Gemischs und ein dritter Frühverstellwinkel für die Änderung der Menge der zugeführten Frischluft sowie der Menge des Kraftstoff-Luft-Gemischs. Der erste, zweite und/oder dritte Frühverstellwinkel sind in dem Mikroprozessor gespeichert.

Die schnelle Verkleinerung des Verstellwinkels kann in weiteren Ausführungsbeispielen der Erfindung sowohl für alle Zylinder gleichzeitig als auch zylinderindividuell erfolgen. Die zylinderindividuelle Verstellung berücksichtigt dabei die individuellen Eigenschaften der Brennkraftmaschinen-Zylinder, eine schnellen Verkleinerung des Verstellwinkels für alle Zylinder gleichzeitig kann demgegenüber unter Umständen das Heranführen an die Klopfgrenze noch schneller bewirken.

In einem weiteren bevorzugten Ausführungsbeispiel muss auch die Klopferkennung an die veränderten Umstände durch die Änderung der der Abgasrückführungsrate, die Änderung der Intensität der Bewegung des Kraftstoff-Luft-Gemischs und die Änderung der Menge der zugeführten Frischluft sowie der Menge des Kraftstoff-Luft-Gemischs angepasst werden. Dies geschieht dadurch, dass der Nachführfaktor N verkleinert wird. Somit kann der zylinderindividuelle Referenzwert $U_{REF,neu}$ schnell an die aktuellen Bedingungen angepasst werden.

**Patentansprüche**

1. Verfahren zum Betreiben einer Brennkraftmaschine, bei dem in mindestens einem Zylinder eine Verbrennung eines in den Zylinder eingebrachten Kraftstoffs in einem Kraftstoff-Luft-Gemisch stattfindet, wobei mittels mindestens einer Stelleinrichtung mindestens ein physikalischer Vorgang beeinflusst wird, der die Verteilung der Bestandteile und/oder die Gesamtzusammensetzung des Kraftstoff-Luft-Gemischs in dem mindestens einen Zylinder verändert, wobei bei Auftreten von Klopfen mittels einer Klopfregelung ein Zündwinkel in dem mindestens einen Zylinder stufenweise von einem Grundzündwinkel um einen Verstellwinkel nach Spät verstellt wird, **dadurch gekennzeichnet, dass** dann, wenn die Verstellung der mindestens einen Stelleinrichtung einen vorgebbaren ersten Schwellwert und/oder die Änderung des mindestens einen physikalischen Vorgangs einen vorgebbaren zweiten Schwellwert überschreitet, der Verstellwinkel schrittweise schnell verkleinert wird, wobei die schnellere Verkleinerung durch eine größere Schrittweite und/oder durch eine höhere Frequenz der Schritte erfolgt.

2. Verfahren nach Anspruch 1, **dadurch gekennzeichnet, dass** als Stelleinrichtung mindestens ein Abgasrückführungsventil und/oder mindestens eine Einund/oder Auslassnockenwellenverstellung oder eine variable Ventilverstellung dient, wobei als physikalischer Vorgang eine Rate des rückgeführten Abgases beeinflusst wird, wobei eine schnelle Verkleinerung des Verstellwinkels erfolgt, wenn die Änderung der Rate des rückgeführten Abgases einen vorgebbaren Ratenänderungsschwellwert überschreitet und/oder wenn die Änderung der Abgasrückführungsventilverstellung einen vorgebbaren Abgasrückführungsventiländerungsschwellwert überschreitet und/oder wenn die Änderung der Ein- und/oder Auslassnockenwellenverstellung einen vorgebbaren Ein- und/oder Auslassnockenwellenänderungsschwellwert überschreitet und/oder wenn die Änderung der variablen Ventilverstellung einen vorgebbaren ersten Ventiländerungsschwellwert überschreitet.

3. Verfahren nach Anspruch 2, **dadurch gekenn-** **zeichnet, dass** bei Überschreitung des Ratenänderungsschwellwerts und/oder des Abgasrückführungsventiländerungsschwellwerts und/oder des Ein- und/oder Auslassnockenwellenänderungsschwellwerts und/oder des ersten Ventiländerungsschwellwerts zu dem Grundzündwinkel zusätzlich ein erster Frühverstellwinkel addiert wird.

4. Verfahren nach einem der Ansprüche 1 bis 3, **dadurch gekennzeichnet, dass** als Stelleinrichtung mindestens eine Ladungsbewegungsklappe dient, wobei als physikalischer Vorgang eine Intensität der Bewegung des Kraftstoff-Luft-Gemischs beeinflusst wird, wobei eine schnelle Verkleinerung des Verstellwinkels erfolgt, wenn die Änderung der Stellung der Ladungsbewegungsklappe einen vorgebbaren Ladungsbewegungsklappenänderungsschwellwert überschreitet.

5. Verfahren nach Anspruch 4, **dadurch gekennzeichnet, dass** bei Überschreitung des Ladungsbewegungsklappenänderungsschwellwerts zu dem Grundzündwinkel zusätzlich ein zweiter Frühverstellwinkel addiert wird.

6. Verfahren nach einem der Ansprüche 1 bis 5, **dadurch gekennzeichnet, dass** als Stelleinrichtung mindestens eine Ein- und/oder Auslassnockenwellenverstellung oder eine variable Ventilsteuerung dient, wobei als physikalischer Vorgang die Menge der zugeführten Frischluft oder die Menge des zugeführten Kraftstoff-Luft-Gemischs beeinflusst wird, wobei eine schnelle Verkleinerung des Verstellwinkels erfolgt, wenn die Änderung der Einund/oder Auslassnockenwellenverstellung einen vorgebbaren Einund/oder Auslassnockenwellenänderungsschwellwert überschreitet und/oder wenn die Änderung der variablen Ventilverstellung einen vorgebbaren zweiten Ventiländerungsschwellwert überschreitet.

7. Verfahren nach Anspruch 6, **dadurch gekennzeichnet, dass** bei Überschreitung des Ein- und/oder Auslassnockenwellenänderungsschwellwerts und/oder des zweiten Ventiländerungsschwellwerts zu dem Grundzündwinkel zusätzlich ein dritter Frühverstellwinkel addiert wird.

8. Verfahren nach einem der Ansprüche 1 bis 7, **dadurch gekennzeichnet, dass** die schnelle Verkleinerung des Verstellwinkels für alle Zylinder gleichzeitig erfolgt.

9. Verfahren nach einem der Ansprüche 1 bis 7, **dadurch gekennzeichnet, dass** die schnelle Verkleinerung des Verstellwinkels zylinderindividuell erfolgt.

**10.** Verfahren nach einem der Ansprüche 1 bis 9, **dadurch gekennzeichnet, dass** bei Aktivierung der schnellen Verkleinerung des Verstellwinkels ein Nachführfaktor für die Berechnung eines Referenzwerts der Klopferkennung geändert wird.

**11.** Verfahren nach einem der Ansprüche 1 bis 10, **dadurch gekennzeichnet, dass** die schnelle Verkleinerung des Verstellwinkels unterbrochen wird, wenn Klopfen auftritt und/oder wenn eine Last- und/oder Drehzahldynamik vorliegt.

**Claims**

**1.** Method for operating an internal combustion engine in which, in at least one cylinder, combustion of a fuel introduced into the cylinder, in a fuel/air mixture, takes place, at least one actuating device influencing at least one physical operation which varies the distribution of the components and/or the overall composition of the fuel/air mixture in the at least one cylinder, and, when knocking occurs, an ignition angle in the at least one cylinder being adjusted in steps from a basic ignition angle by the amount of an adjustment angle by means of a knock control, **characterized in that**, when the adjustment of the at least one actuating device exceeds a predeterminable first threshold value and/or the change in the at least one physical operation exceeds a predeterminable second threshold value, the adjustment angle is rapidly reduced in steps, the more rapid reduction taking place by means of a greater step width and/or by means of a higher frequency of the steps.

**2.** Method according to Claim 1, **characterized in that** the actuating device is at least one exhaust-gas recirculation valve and/or at least one inlet and/or outlet camshaft adjustment or a variable valve adjustment, the physical operation influenced being a rate of the recirculated exhaust gas, a rapid reduction in the adjustment angle taking place when the change in the rate of the recirculated exhaust gas exceeds a predeterminable rate-change threshold value and/or when the change in the exhaust-gas recirculation valve adjustment exceeds a predeterminable exhaust-gas recirculation valve change threshold value and/or when the change in the inlet and/or outlet camshaft adjustment exceeds a predeterminable inlet and/or outlet camshaft change threshold value and/or when the change in the variable valve adjustment exceeds a predeterminable first valve-change threshold value.

**3.** Method according to Claim 2, **characterized in that**, when the rate-change threshold value and/or the exhaust-gas recirculation valve change threshold value and/or the inlet and/or outlet camshaft change threshold value and/or the first valve-change threshold value is exceeded, a first advance adjustment angle is additionally added to the basic ignition angle.

**4.** Method according to one of Claims 1 to 3, **characterized in that** the actuating device is at least one charge-movement valve, the physical operation influenced being an intensity of the movement of the fuel/air mixture, a rapid reduction in the adjustment angle taking place when the change in the position of the charge-movement valve exceeds a predeterminable charge-movement valve change threshold value.

**5.** Method according to Claim 4, **characterized in that**, when the charge-movement valve change threshold value is exceeded, a second advance adjustment angle is additionally added to the basic ignition angle.

**6.** Method according to one of Claims 1 to 5, **characterized in that** the actuating device is at least one inlet and/or outlet camshaft adjustment or a variable valve control, the physical operation influenced being the quantity of the fresh air supplied or the quantity of the fuel/air mixture supplied, a rapid reduction in the adjustment angle taking place when the change in the inlet and/or outlet camshaft adjustment exceeds a predeterminable inlet and/or outlet camshaft change threshold value and/or when the change to the variable valve adjustment exceeds a predeterminable second valve-change threshold value.

**7.** Method according to Claim 6, **characterized in that**, when the inlet and/or outlet camshaft change threshold value and/or the second valve-change threshold value is exceeded, a third advance adjustment angle is additionally added to the basic ignition angle.

**8.** Method according to one of Claims 1 to 7, **characterized in that** the rapid reduction in the adjustment angle takes place simultaneously for all cylinders.

**9.** Method according to one of Claims 1 to 7, **characterized in that** the rapid reduction in the adjustment angle takes place individually for each cylinder.

**10.** Method according to one of Claims 1 to 9, **characterized in that**, when the rapid reduction in the adjustment angle is activated, a tracking factor for calculating a reference value for knock detection is changed.

**11.** Method according to one of Claims 1 to 10, **char-**

**acterized in that** the rapid reduction in the adjustment angle is interrupted when knocking occurs and/or when load and/or rotational-speed dynamics prevail.

## Revendications

1. Procédé de fonctionnement d'un moteur à combustion interne, selon lequel

   - à l'intérieur d'au moins un cylindre, a lieu la combustion d'un mélange carburant-air introduit dans ce cylindre,
   - au moins un dispositif de réglage agit sur un processus physique pour faire varier la répartition des composants et/ou la composition globale du mélange carburant-air dans au moins un cylindre,
   - si un cliquetis apparaît, un régulateur de cliquetis fait passer par étapes, dans au moins un cylindre, l'angle d'allumage, d'un angle de base à un autre angle en le décalant dans le sens retardant l'allumage, d'un angle de décalage,

   **caractérisé en ce que**
   si le déplacement d'un dispositif de réglage, au nombre d'un au moins, conduit à un dépassement d'une première valeur de seuil prédéterminable, et/ou si la modification d'au moins un processus physique conduit à un dépassement d'une seconde valeur de seuil, l'angle de décalage est diminué rapidement par gradins, une diminution plus rapide se réalisant par l'intermédiaire d'un gradin plus grand et/ou d'une fréquence plus élevée de franchissement des gradins.

2. Procédé selon la revendication 1,
   **caractérisé en ce que**

   - le dispositif de réglage utilisé est au moins une soupape de recyclage de gaz d'échappement et/ou au moins un déplacement des soupapes d'admission et/ou d'échappement ou un réglage variable des soupapes,
   - le processus physique influencé est le taux de recyclage des gaz d'échappement,
   - une réduction rapide de l'angle de décalage est effectuée quand la variation du taux des gaz d'échappement recyclés dépasse une valeur de seuil, prédéfinissable, de cette variation, et/ou si la variation du déplacement de la soupape de recyclage des gaz d'échappement dépasse une valeur de seuil, prédéfinissable, de cette variation et/ou si la variation du déplacement de l'arbre à cames d'admission et/ou d'échappement dépasse une valeur de seuil, prédéfinissable, de cette variation et/ou si la variation du déplacement variable des soupapes dépasse une première valeur de seuil, prédéfinissable, de la variation des soupapes.

3. Procédé selon la revendication 2,
   **caractérisé en ce que**
   quand est dépassée la valeur de seuil de variation de taux, et/ou la valeur de seuil de la variation de la soupape de recyclage des gaz d'échappement et/ou la valeur de seuil de la variation de l'arbre à cames d'admission ou d'échappement et/ou la première valeur de seuil de variation des soupapes, à l'angle d'allumage de base est ajouté un premier angle de décalage dans le sens avançant l'allumage.

4. Procédé selon l'une des revendications 1 à 3,
   **caractérisé en ce que**
   comme dispositif de réglage est utilisé au moins un clapet de déplacement de la charge, le processus physique influencé étant l'intensité du mouvement du mélange carburant-air, de sorte qu'une diminution rapide de l'angle de décalage a lieu quand la variation de la position du clapet de déplacement de la charge dépasse une valeur de seuil de la variation du clapet de déplacement de la charge, prédéfinissable.

5. Procédé selon la revendication 4,
   **caractérisé en ce que**
   quand la valeur de seuil de variation du clapet de déplacement de la charge est dépassée, à l'angle d'allumage de base est ajouté un second angle de décalage dans le sens avançant l'allumage.

6. Procédé selon l'une des revendications 1 à 5,
   **caractérisé en ce que**

   - le dispositif de réglage utilisé est au moins un déplacement de l'arbre à cames d'admission ou d'échappement et/ou au moins une commande variable des soupapes,
   - le processus physique influencé est le débit d'air d'admission ou le débit du mélange de carburant et d'air admis,
   - une diminution rapide de l'angle de décalage a lieu si la variation du déplacement de l'arbre à cames d'admission et/ou d'échappement dépasse une valeur de seuil de la variation de l'arbre à cames d'admission et/ou d'échappement prédéfinissable et/ou si la variation du déplacement variable des soupapes dépasse une seconde valeur de seuil de la variation des soupapes, prédéfinissable.

7. Procédé selon la revendication 6,
   **caractérisé en ce que**

quand est dépassée la valeur de seuil de la variation de l'arbre à cames d'admission et/ou d'échappement et/ou la seconde valeur de seuil de la variation des soupapes, à l'angle d'allumage de base est ajouté un troisième angle de décalage dans le sens avançant l'allumage.

8. Procédé selon l'une des revendications 1 à 7, **caractérisé en ce que** la diminution rapide de l'angle de décalage a lieu en même temps pour tous les cylindres.

9. Procédé selon l'une des revendications 1 à 7, **caractérisé en ce que** la diminution rapide de l'angle de décalage a lieu individuellement pour chaque cylindre.

10. Procédé selon l'une des revendications 1 à 9, **caractérisé en ce que** lors de l'activation de la diminution rapide de l'angle de décalage, un facteur d'ajustement servant à calculer une valeur de référence de reconnaissance de cliquetis est modifié.

11. Procédé selon l'une des revendications 1 à 10, **caractérisé en ce que** la diminution rapide de l'angle de décalage est interrompue si apparaît du cliquetis et/ou si on est en présence d'une dynamique de charge et/ou de vitesse de rotation.